# EUROPEAN PATENT APPLICATION

(11) **EP 4 675 955 A1**
(43) Date of publication of application: **07.01.2026**
(21) Application number: 23924663.0
(22) Date of filing: 01.03.2023
(51) Int. Cl.: H04L 5/00, H04W 24/02

(54) **METHODS FOR DETERMINING RESOURCE STATE, APPARATUSES, AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2023/079142
(87) International publication number: WO 2024/178693

(57) **Abstract**

The present disclosure relates to methods for determining a resource state, apparatuses, and a storage medium. A method comprises: a terminal device sending a first message to a network device, wherein the first message may comprise a first parameter domain, the first parameter domain may be used for indicating a resource usage state of at least one first wireless resource within a configured grant (CG) period, and the first wireless resource may be a wireless resource allocated to the terminal device by the network device on the basis of a configured grant (CG) transmission mode. Therefore, the terminal device can report to the network device the resource usage state of the first wireless resource, so that the network device can flexibly use and schedule the first wireless resource according to the resource usage state, thus improving the utilization rate of wireless resources allocated on the basis of the CG transmission mode.

## Description

### TECHNICAL FIELD

The present disclosure relates to the technical field of communication, and in particular, to methods and apparatuses for determining a resource state, and a storage medium.

### BACKGROUND

In wireless communication systems, in order to reduce uplink service latency, the 3rd generation partnership project (3GPP) introduces a configured grant (CG) transmission mode, which may also be referred to as an uplink grant-free transmission mode. Through the CG transmission mode, the network device may pre-configure radio resources used for uplink transmission within one CG cycle for the terminal device. During this CG cycle, the terminal device may autonomously use the radio resources for uplink transmission without being scheduled by the network device, thereby saving scheduling resources and reducing uplink service latency. The radio resources pre-configured by the network device for the terminal device may be referred to as the configured grant physical uplink shared channel transmission resource (CG PUSCH TR), or may also be referred to as the configured grant physical uplink shared channel transmission occasion (CG PUSCH TO).

### SUMMARY

To overcome the above-mentioned problems existing in the related art, the present disclosure provides methods and apparatuses for determining a resource state, and a storage medium.

According to a first aspect of the embodiments of the present disclosure, a method for determining a resource state is provided, which is performed by a terminal device, and the method includes:
sending a first message to a network device; where the first message includes a first parameter field, the first parameter field is used to indicate a resource usage state of at least one first radio resource within a configured grant (CG) cycle, and the first radio resource is a radio resource allocated to the terminal device by the network device based on a configured grant (CG) transmission mode.

According to a second aspect of the embodiments of the present disclosure, a method for determining a resource state is provided, which is performed by a network device, and the method includes:
receiving a first message sent by a terminal device; where the first message includes a first parameter field; and
determining a resource usage state of at least one first radio resource within a configured grant (CG) cycle according to the first parameter field; where the first radio resource is a radio resource allocated to the terminal device by the network device based on a configured grant (CG) transmission mode.

According to a third aspect of the embodiments of the present disclosure, a terminal device is provided, and the terminal device includes:
a sending module, configured to send a first message to a network device; where the first message includes a first parameter field, the first parameter field is used to indicate a resource usage state of at least one first radio resource within a configured grant (CG) cycle, and the first radio resource is a radio resource allocated to the terminal device by the network device based on a configured grant (CG) transmission mode.

According to a fourth aspect of the embodiments of the present disclosure, a network device is provided, and the network device includes:
a receiving module, configured to receive a first message sent by a terminal device; where the first message includes a first parameter field; and
a processing module, configured to determine a resource usage state of at least one first radio resource within a configured grant (CG) cycle according to the first parameter field; where the first radio resource is a radio resource allocated to the terminal device by the network device based on a configured grant (CG) transmission mode.

According to a fifth aspect of an embodiment of the present disclosure, a communication apparatus is provided, and the apparatus includes:
a processor; and
a memory for storing processor-executable instructions;
where the processor is configured to execute steps of the method for determining a resource state provided in the first aspect of the present disclosure.

According to a sixth aspect of the embodiments of the present disclosure, a communication apparatus is provided, and the apparatus includes:
a processor; and
a memory for storing processor-executable instructions;
where the processor is configured to execute steps of the method for determining a resource state provided in the second aspect of the present disclosure.

According to a seventh aspect of the embodiments of the present disclosure, a computer-readable storage medium is provided, on which computer program instructions are stored, and the computer program instructions, when executed by a processor, implement steps of the method for determining a resource state provided in the first aspect of the present disclosure.

According to an eighth aspect of the embodiments of the present disclosure, a computer-readable storage medium is provided, on which computer program instructions are stored, and the computer program instructions, when executed by a processor, implement steps of the method for determining a resource state provided in the second aspect of the present disclosure.

According to a ninth aspect of the embodiments of the present disclosure, a communication system is provided, and the communication system includes:
a terminal device, where the terminal device is capable of executing the method for determining a resource state provided in the first aspect of the present disclosure; and
a network device, where the network device is capable of executing the method for determining a resource state provided in the second aspect of the present disclosure.

The technical solutions provided by the embodiments of the present disclosure may include the following beneficial effects. The terminal device sends the first message to the network device, where the first message may include the first parameter field, and the first parameter field may be used to indicate the resource usage state of at least one first radio resource within a configured grant (CG) cycle, and the first radio resource may be the radio resource allocated to the terminal device by the network device based on the configured grant (CG) transmission mode. In this way, the terminal device can report the resource usage state of the first radio resource to the network device, so that the network device can flexibly use and schedule the first radio resource according to the resource usage state, thereby improving the utilization rate of the radio resource allocated based on the CG transmission mode.

It should be understood that the foregoing general description and the following detailed description are exemplary and explanatory only, and do not limit the present disclosure.

### BRIEF DESCRIPTION OF THE DRAWINGS

The accompanying drawings herein, which are incorporated in and constitute a part of the specification, illustrate embodiments consistent with the present disclosure and are used in conjunction with the specification to explain principles of the present disclosure.
FIG. 1 is a schematic diagram of a communication system shown according to an exemplary embodiment.
FIG. 2 is a flow chart of a method for determining a resource state shown according to an exemplary embodiment.
FIG. 3 is a schematic diagram of first radio resources and second radio resources shown according to an exemplary embodiment.
FIG. 4 is a schematic diagram of another type of first radio resources and second radio resources shown according to an exemplary embodiment.
FIG. 5 is a flow chart of a method for determining a resource state shown according to an exemplary embodiment.
FIG. 6 is a flow chart of a method for determining a resource state shown according to an exemplary embodiment.
FIG. 7 is a flow chart of a method for determining a resource state shown according to an exemplary embodiment.
FIG. 8 is a block diagram of a terminal device shown according to an exemplary embodiment.
FIG. 9 is a block diagram of a network device shown according to an exemplary embodiment.
FIG. 10 is a block diagram of a communication device shown according to an exemplary embodiment.

### DETAILED DESCRIPTION

Exemplary embodiments are described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. Instead, they are merely examples of apparatuses and methods consistent with some aspects of the present disclosure as detailed in the appended claims.

It should be noted that all the actions of obtaining signals, information or data in the present disclosure are carried out under the premise of complying with the corresponding data protection laws and policies of the country where the present disclosure is and obtaining authorization from the owner of the corresponding device.

In the present disclosure, terms such as "first" and "second" are used to distinguish similar objects without necessarily being understood as a specific order or precedence. In addition, in the description with reference to the drawings, the same reference numerals in different drawings indicate the same elements unless otherwise specified.

In the description of the present disclosure, unless otherwise specified, "a plurality of" means two or more, and other quantifiers are similar to this. The expression "at least one (item)", "one or more (items)" or other similar expressions refer to any combination of these items, including singular item or any combination of plural items. For example, "at least one (item)" can refer to any number. For another example, one or more (items) of a, b, and c can mean: a, b, c, a-b, a-c, b-c, or a-b-c, where a, b, and c can be singular or plural; "and/or" is an association relationship that describes the associated objects, which means that there can be three kinds of relationships, for example, A and/or B can mean that A exists alone, A and B exist at the same time, and B exists alone, where A and B can be singular or plural. The character "/" indicates that the related objects are in an "or" relationship. The singular forms "a/an", "a type", "an item", "the", and "said" are also intended to include the plural forms unless the context clearly indicates other meanings.

Although operations or steps are described in a specific order in the embodiments of the present disclosure or the accompanying drawings, this should not be construed as requiring these operations or steps to be performed in the specific order shown or in a serial order, nor as requiring all the shown operations or steps to be performed to achieve the desired result. In the embodiments of the present disclosure, these operations or steps may be performed in any order without contradiction; or these operations or steps may be performed in parallel; or a part of these operations or steps may be performed; or operations or steps in multiple embodiments or drawings may be combined arbitrarily, and the present disclosure is not limited thereto.

The implementation environment of embodiments of the disclosure is first introduced below.

The technical solution of embodiments of the disclosure may be applied to various communication systems. The communication system may include one or more of a 4th generation (4G) communication system, a 5th generation (5G) communication system, and other future wireless communication systems (such as 6G). The communication system may also include one or more of a public land mobile network (PLMN), a device-to-device (D2D) communication system, a machine to machine (M2M) communication system, an Internet of Things (IoT) communication system, a Vehicle-to-Everything (V2X) communication system, or other communication systems.

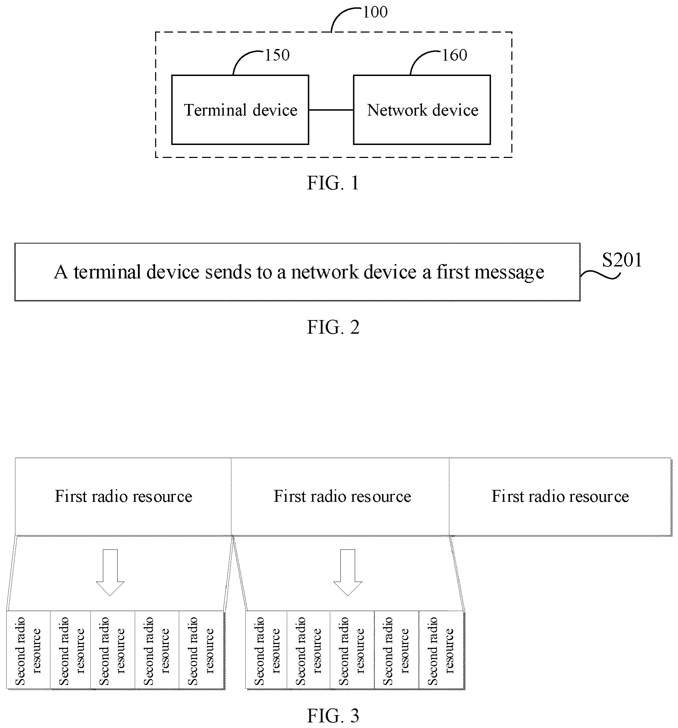

FIG. 1 is a schematic diagram of a communication system shown according to an exemplary embodiment. As illustrated in FIG. 1, the communication system may include a terminal device 150 and a network device 160. The communication system may be configured to support a 4G network access technology, such as a long term evolution (LTE) access technology, or 5G network access technology, such as new radio access technology (New RAT), or other future wireless communication technologies. It should be noted that there may be one or more network devices and one or more terminals in the communication system. The number of network devices and terminals in the communication system illustrated in FIG. 1 is only an adaptive example, which is not limited in the disclosure.

The network device in FIG. 1 may be configured to support the terminal to access, for example, the network device may be an evolutional base station (evolutional Node B, eNB or eNodeB) in an LTE; the network device may also include a next generation base station (the next Generation NodeB, gNB or gNodeB) in a 5G network; the network device may also include an NG radio access network (NG-RAN) device in the 5G network; the network device may also include at least one of a base station of the public land mobile network (PLMN) in a future evolution, a broadband network gateway (BNG), an aggregation switch, or a non-3rd generation partnership project access device, etc. Optionally, the network device in the embodiments of the present disclosure may include at least one of following various forms of base stations, such as: a macro base station, a micro base station (also called small station), a relay station, an access point, a 5G base station or a future base station, a satellite, a transmitting and receiving point (TRP), a transmitting point (TP), a mobile switching center, device-to-device (D2D) device, a machine-to-machine (M2M) device, an internet of things (IoT) device, a vehicle-to-everything (V2X) device, or other devices that perform a base station function in the communication, which is not limited in embodiments of the disclosure. For convenience of description, in all embodiments of the disclosure, devices providing a wireless communication function for terminals are collectively referred to as network device or base station.

The terminal device in FIG. 1 may be an electronic device that provides voice or data connectivity. For example, the terminal device may also be referred to as a user equipment (UE), a subscriber unit, a mobile station, a station, a terminal, etc. For example, the terminal device may include a smartphone, a smart wearable device, a smart speaker, a smart tablet, a wireless modem, a wireless local loop (WLL) station, a personal digital assistant (PDA), and a customer premise equipment (CPE), etc. With development of the wireless communication technology, any device that is capable of accessing the communication system, communicating with the network device of the communication system, or communicating with other objects via the communication system, or directly communicating between two or more devices can all be the terminal device in the embodiments of the present disclosure, for example, a terminal and a car in an intelligent transportation, a household device in a smart home, a power meter reading instrument in a smart grid, a voltage monitoring instrument, an environmental monitoring instrument, a video monitoring instrument in an intelligent secure network, a cash register, etc. In embodiments of the disclosure, the terminal device may communicate with the network device; multiple terminal devices may also communicate with each other; and multiple network devices may also communicate with each other. The terminal device may be statically fixed or mobile, which is not limited in the disclosure.

In some embodiments of the present disclosure, the above-mentioned terminal device and network device are both capable of supporting the configured grant (CG) transmission mode, which may also be referred to as the uplink grant-free transmission mode.

In some embodiments, the network device may allocate, based on the CG transmission mode, a first radio resource for CG transmission to the terminal device, and notify the terminal device of all information about the first radio resource through a second message (such as RRC signaling or other messages); after receiving the second message sent by the network device, the terminal device can autonomously use the radio resource for uplink transmission within a CG cycle without the need for being scheduled by the network device, thereby saving scheduling resources and reducing uplink service latency.

In some other embodiments, the network device may allocate, based on the CG transmission mode, a first radio resource for CG transmission to the terminal device, notify the terminal device of all information about the first radio resource through a second message (such as RRC signaling or other messages), and activate the first radio resource through a third message (such as activation DCI indication, MAC CE or other messages); after receiving the second message and the third message, the terminal device can autonomously use the CG resource for uplink transmission within a CG cycle without the need for being scheduled by the network device, thereby saving scheduling resources and reducing uplink service latency.

In some other embodiments, the network device may allocate, based on the CG transmission mode, a first radio resource for CG transmission to the terminal device, notify the terminal device of part of the information about the first radio resource through a second message (such as RRC signaling or other messages), send the other part of the information of the first radio resource to the terminal device through a third message (such as activation DCI indication, MAC CE or other messages), and activate the first radio resource, thereby completing all the information of the first radio resource. After receiving the second message and the third message, the terminal device can autonomously use the CG resource for uplink transmission within a CG cycle without the need for being scheduled by the network device, thereby saving scheduling resources and reducing uplink service latency.

It should be noted that the above-mentioned first radio resource may be referred to as the physical uplink shared channel transmission occasion of configured grant (CG PUSCH TO), or may be simply referred to as the configured grant transmission occasion (CG TO), or may also be simply referred to as the transmission occasion (TO), or may also be simply referred to as CG PUSCH Occasion. The number of symbols corresponding to the above-mentioned CG cycle may be determined by the network device and configured to the terminal device through high-layer signaling (such as RRC signaling). For example, one CG cycle may correspond to a maximum of 14*40960 symbols.

In the related art, the management and scheduling of radio resources based on the CG transmission mode is relatively simple and cannot adapt to the needs of new services. For example, the above-mentioned communication system may also support XR services (such as augmented reality (AR) and/or virtual reality (VR)). XR services are different from the three existing typical services, that is, the ultra-reliable low-latency communications (URLLC), enhanced mobile broadband (eMBB), and enhanced machine-type communication (eMTC). XR services are characterized by periodicity, requirements for high throughput, and requirements for low latency.

In addition, XR services also have a certain degree of flexibility. The radio resources required for their transmission may not match the first radio resources allocated by the network device based on the CG transmission mode. For example, some of the first radio resources may be idle, or some time domain symbols of the first radio resources may be idle, which results in low utilization of the radio resources allocated based on the CG transmission mode.

FIG. 2 is a flow chart of a method for determining a resource state shown according to an exemplary embodiment. The method may be performed by a terminal device in the above communication system. As shown in FIG. 2, the method may include the following.

In S201, the terminal device sends a first message to the network device.

In some embodiments, the first message may include a first parameter field, which may be used to indicate a resource usage state of at least one first radio resource within a configured grant (CG) cycle. The first radio resource may be a radio resource allocated to the terminal device by the network device based on a configured grant (CG) transmission mode.

In some embodiments, the network device may allocate N first radio resources within the configured grant (CG) cycle to the terminal device. The terminal device determines the N first radio resources within the configured grant (CG) cycle based on the configuration of the network device and autonomously selects and uses the N first radio resources for uplink transmission within the configured grant (CG) cycle. N may be any value greater than or equal to 1, for example, N may be 4. The first radio resource may also be referred to as a CG PUSCH TO, a CG TO, or a TO.

In one implementation manner, the terminal device may receive a second message sent by the network device, and obtain all information corresponding to the first radio resource through the second message.

In another implementation manner, the terminal device may receive a second message and a third message sent by the network device, obtain a portion of information corresponding to the first radio resource through the second message, and obtain another portion of information corresponding to the first radio resource through the third message.

In this way, the terminal device determines N first radio resources within one configured grant (CG) cycle through any of the above manners.

In some embodiments, the resource usage state of the first radio resource may be an occupied state or an idle state.

In one implementation manner, the resource usage state of the first radio resources may be the occupied state, and the occupied state may be used to indicate that the first radio resource is partially occupied or fully occupied.

For example, the first radio resource may include multiple time domain symbols. If the terminal device occupies some or all of the time domain symbols of the first radio resource, the resource usage state of the first radio resource may be the occupied state.

It should be noted that the manner in which the terminal device occupies the first radio resource may include using the first radio resource for signal transmission, or may include notifying the network device to reserve the first radio resource, but the terminal device does not actually use the first radio resource for signal transmission.

In this way, the occupied state may indicate that the first radio resource is partially occupied or fully occupied.

In another implementation manner, the resource usage state of the first radio resource may be an idle state, and the idle state may be used to indicate that there are unoccupied radio resources in the first radio resource.

For example, the first radio resources may include multiple time domain symbols. If the terminal device occupies some of the time domain symbols of the first radio resource, or the terminal device does not occupy any time domain symbol of the first radio resource, the resource usage state of the first radio resource may be an idle state.

In another implementation, the resource usage state of the first radio resource may be an idle state, and the idle state may be used to indicate that the occupancy rate of the first radio resource is less than or equal to an occupancy rate threshold.

The occupancy rate threshold may be any preset value, for example, 50%, 80% or 90%.

For example, the first radio resource may include multiple time domain symbols, and the ratio of the number of time domain symbols occupied by the terminal device to the number of time domain symbols contained in the first radio resource may be used as the occupancy rate of the first radio resource. If the occupancy rate is less than or equal to the occupancy rate threshold, the resource usage state of the first radio resource may be the idle state.

In this way, the idle state can indicate the resource usage of the first radio resource.

It should be noted that if one configured grant CG cycle includes multiple first radio resources, the resource usage state of different first radio resources may be the same or different. For example, the usage state of some first radio resources is the occupied state, and the usage state of another part of the first radio resources is the non-occupied state. For another example, the usage state of some first radio resources is the idle state, and the usage state of another part of the first radio resources is the non-idle state. For another example, the usage state of some first radio resources is the occupied state, and the usage state of another part of the first radio resources is the idle state.

It should be noted that the occupied state of the first radio resource may also be referred to as a first occupied state; the idle state of the first radio resource may also be referred to as a first idle state.

In another implementation manner, the resource usage state of the first radio resource may be an occupied state or a non-occupied state.

The occupied state may be used to indicate that the first radio resource is partially occupied or fully occupied, and the non-occupied state may be used to indicate that the first radio resource is not occupied.

For example, the first radio resource may include multiple time domain symbols. If the terminal device occupies part or all of the time domain symbols of the first radio resource, the resource usage state of the first radio resource may be the occupied state; if all the time domain symbols of the first radio resource are not occupied by the terminal device, the resource usage state of the first radio resource may be the non-occupied state.

In this way, the resource usage of the first radio resource can be indicated by the occupied state or the non-occupied state.

In another implementation manner, the resource usage state of the first radio resource may be an idle state or a non-idle state.

In one implementation manner, the idle state may be used to indicate that there are unoccupied radio resources in the first radio resource; and the non-idle state may be used to indicate that the first radio resource is fully occupied.

For example, the first radio resource may include multiple time domain symbols. If the terminal device occupies part of the time domain symbols of the first radio resource, or the terminal device does not occupy any time domain symbol of the first radio resource, the resource usage state of the first radio resource may be the idle state; if the terminal device occupies all the time domain symbols of the first radio resource, the resource usage state of the first radio resource may be the non-idle state.

In another implementation manner, the idle state may be used to indicate that the occupancy rate of the first radio resource is less than or equal to an occupancy rate threshold; and the non-idle state may be used to indicate that the occupancy rate of the first radio resource is greater than the occupancy rate threshold. The occupancy rate threshold may be any preset value, for example, 50%, 80%, or 90%.

For example, the first radio resource may include multiple time domain symbols, and the ratio of the number of time domain symbols occupied by the terminal device to the number of time domain symbols contained in the first radio resource may be taken as the occupancy rate of the first radio resource. If the occupancy rate is less than or equal to the occupancy rate threshold, the resource usage state of the first radio resource may be the idle state; if the occupancy rate is greater than the occupancy rate threshold, the resource usage state of the first radio resource may be the non-idle state.

In this way, the resource usage of the first radio resource can be indicated by the idle state or the non-idle state.

In some embodiments, the first parameter field may include at least one first indication bit, and the first indication bit may be used to indicate a resource usage state corresponding to the first radio resource.

The number of first indication bits included in the first parameter field may be greater than or equal to the number of first radio resources within the CG cycle, and one first indication bit may be used to indicate the resource usage state of one first radio resource. For example, if the value of the first indication bit is a first value (e.g., 1), it may be used to indicate that the resource usage state of the first radio resource is a specific state (e.g., an occupied state or an idle state); if the value of the first indication bit is a second value (e.g., 0), it may be used to indicate that the resource usage state of the first radio resource is a non-specific state (e.g., a non-occupied state or a non-idle state).

It should be noted that the specific state may be the occupied state or the idle state mentioned above, and the above-mentioned first value and the second value are not equal. For example, the first value may be 1 and the second value may be 0, or vice versa, the first value may be 0 and the second value may be 1, which is not limited by the present disclosure.

For example, the network device allocates N first radio resources to the terminal device within the CG cycle, and the number of first indication bits included in the first parameter field (also referred to as the number of bits or the bit size) may be N, that is, the first parameter includes N first indication bits, and one first indication bit may be used to indicate the resource usage state corresponding to one first radio resource. Taking N equal to 4 as an example, if the value of the first parameter field consisting of four first indication bits is 1100, it can be determined that the resource usage state of the first and second first radio resources is the specific state, and the resource usage state of the third and fourth first radio resources is the non-specific state.

In this way, the resource usage state corresponding to the first radio resource can be indicated by the first indication bit in the first parameter field.

In some other embodiments, the first parameter field may include an index corresponding to at least one first radio resource, and the resource usage state of the at least one first radio resource is the same.

For example, the index is used to indicate N first radio resources, where N may be any positive integer, and the resource usage states of the N first radio resources are all the same, for example, they may all be in an occupied state or in an idle state.

For example, the index may be a row index in a preset resource index table, and each row in the preset resource index table may correspond to an index of at least one first radio resource. For example, the network device allocates 4 first radio resources to the terminal device within the CG cycle, the first row of the preset resource index table may include the first radio resource 1 and the first radio resource 2, the second row of the preset resource index table may include the first radio resource 2 and the first radio resource 3, the third row of the preset resource index table may include the first radio resource 2, the first radio resource 3 and the first radio resource 4, and so on. The preset resource index table may include at most all permutations and combinations of the 4 first radio resources (at most 24 rows), or the preset resource index table may include at most some permutations and combinations of the 4 first radio resources (less than 24 rows).

It should be noted that the preset resource index table may be pre-defined by a protocol, or may be pre-configured by a network device and sent to the terminal device.

In this way, the resource usage state corresponding to the first radio resource can be indicated through the index in the first parameter field.

Through the above method, the terminal device sends the first message to the network device, where the first message may include the first parameter field, and the first parameter field may be used to indicate the resource usage state of at least one first radio resource within a configured grant (CG) cycle. The first radio resource may be the radio resource allocated to the terminal device by the network device based on the configured grant (CG) transmission mode. In this way, the terminal device can report the resource usage state of the first radio resource to the network device, so that the network device can flexibly use and schedule the first radio resource based on the resource usage state, thereby improving the utilization rate of the radio resource allocated based on the CG transmission mode.

In some embodiments of the present disclosure, the above-mentioned first message may include a first parameter field and a second parameter field, and the first parameter field may be used to indicate the resource usage state corresponding to the first radio resource; the second parameter field may be used to indicate a resource usage state corresponding to a second radio resource, where the second radio resource may be a subset of the first radio resource.

In some embodiments, the first radio resource may be a physical uplink shared channel transmission occasion of the configured grant (CG PUSCH TO), and the second radio resource may be a sub-occasion of transmission of physical uplink shared channel of the configured grant (CG PUSCH SUB-TO), which may also be referred to as SUB-TO for short. The SUB-TO may be a subset of TO, and one TO may include one or more SUB-TOs.

In some other embodiments, the resource usage state corresponding to the second radio resource may be an idle state or an occupied state. If there are multiple second radio resources, the resource usage states corresponding to different second radio resources may be the same or different.

In one implementation manner, the idle state may be used to indicate that no second radio resource is occupied.

In one implementation manner, the occupied state may be used to indicate that the second radio resource is partially occupied or fully occupied.

For example, the second radio resource may include one time domain symbol or multiple time domain symbols. If some or all of the multiple time domain symbols of the second radio resource are occupied, the resource usage state corresponding to the second radio resource may be the occupied state; if none of the multiple time domain symbols of the second radio resource is occupied, the resource usage state corresponding to the second radio resource may be the idle state.

In this way, the resource usage state of the second radio resource can be indicated by the idle state or the occupied state.

It should be noted that the occupied state of the second radio resource may also be referred to as a second occupied state; the idle state of the second radio resource may also be referred to as a second idle state.

In some embodiments, the first parameter field may include N first indication bits, where N may be any natural number, and one first indication bit may be used to indicate the resource usage state corresponding to one first radio resource.

Furthermore, the second parameter field may include M second indication bits. Similarly, M may be any natural number, and the sum of M and N may be equal to the number of indication bits. The number of indication bits may be a value preset by the terminal device, or the number of indication bits may be a value preset by the network device and sent to the terminal device. The number of indication bits may be used to indicate the total number of bits in the first parameter field and the second parameter field. The number of indication bits may also be any natural number.

In some embodiments, the number of indication bits may also be any positive integer greater than or equal to 1, and N may also be any positive integer greater than or equal to 1.

In some embodiments, the second parameter field may include at least one second indication bit, where one second indication bit may be used to indicate the resource usage state of one second radio resource. The second radio resource is determined by any of the following methods.

In method 1, each first radio resource is divided according to the number of second indication bits to obtain at least one second radio resource.

In some embodiments, the terminal device may group the second indication bits according to the number of first radio resources, and divide each first radio resource according to the number of bits of each group of second indication bits to obtain at least one second radio resource.

In some embodiments, the terminal device may determine a first number of grouped second indication bits corresponding to each first radio resource based on the number of first radio resources and the number of second indication bits contained in the second parameter field, and divide each first radio resource according to the first number to obtain the first number of grouped second radio resources.

FIG. 3 is a schematic diagram of first radio resources and second radio resources shown according to an exemplary embodiment. As shown in FIG. 3, if there are two first radio resources and the number of second indication bits is 10, that is, the second parameter field includes 10 second indication bits, each first radio resource may be divided into five parts, thereby resulting in a total of 10 second radio resources. Each second indication bit may be used to indicate the resource usage state of one second radio resource.

In method 2, a third radio resource is divided according to the number of the second indication bits to obtain at least one second radio resource, and the fourth radio resource is a radio resource obtained by combining the at least one first radio resource.

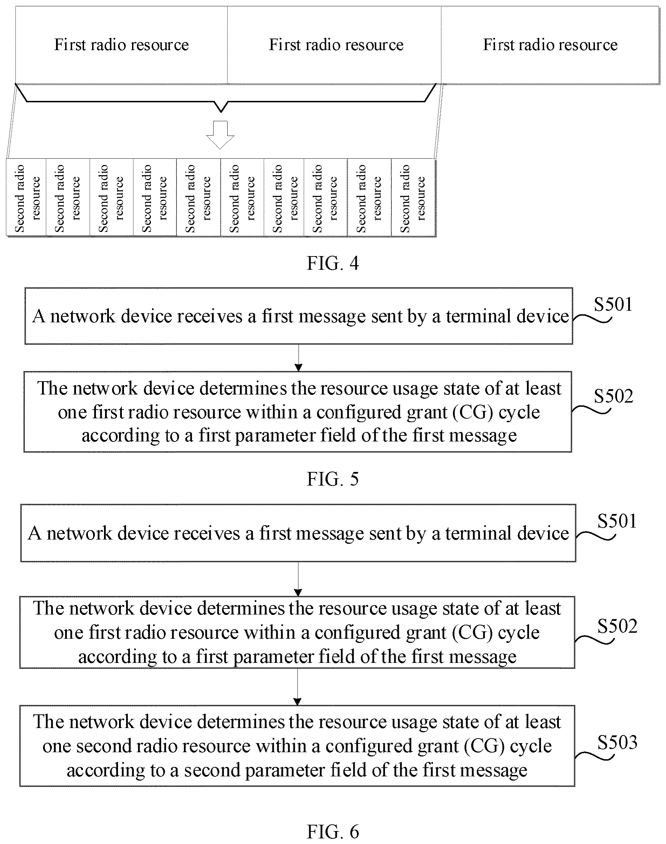

FIG. 4 is a schematic diagram of another type of first radio resources and second radio resources. As shown in FIG. 4, if there are two first radio resources and the number of second indication bits is 10, that is, the second parameter field includes 10 second indication bits, the two first radio resources may be combined to obtain a third radio resource, and the third radio resource may be divided into 10 parts, resulting in a total of 10 second radio resources. Each second indication bit may be used to indicate the resource usage state of one second radio resource.

In some embodiments, the at least one first radio resource may be combined in a cascade manner, for example, multiple first radio resources may be connected end-to-end in chronological order to obtain the third radio resource.

In method 3, each fourth radio resource is divided according to the number of the second indication bits to obtain at least one second radio resource, and the fourth radio resource is the first radio resource of which resource usage state is an occupied state or an idle state.

For example, the fourth radio resource may be the first radio resource of which resource usage state is a specific state, and the specific state may be any one of the occupied state and the idle state.

In some embodiments, the terminal device may group the second indication bits according to the number of fourth radio resources, and divide each fourth radio resource according to the number of bits of each group of second indication bits to obtain at least one second radio resource, where the fourth radio resource is at least one first radio resource of which the resource usage state is the specific state (for example, occupied state or idle state).

In some embodiments, the terminal device can determine a second number of grouped second indication bits corresponding to each fourth radio resource based on the number of fourth radio resources and the number of second indication bits contained in the second parameter field, and divide each fourth radio resource according to the second number to obtain the second number of grouped second radio resources.

In some embodiments, the specific state may be the occupied state, and the occupied state may be used to indicate that the first radio resource is partially occupied or fully occupied.

The occupied state may be used to indicate that the first radio resource is partially occupied or fully occupied.

For example, the first radio resource may include multiple time domain symbols. If the terminal device occupies some or all of the time domain symbols of the first radio resource, the resource usage state of the first radio resource may be the occupied state.

It should be noted that the manner in which the terminal device occupies the first radio resource may include using the first radio resource for signal transmission, and may also include notifying the network device to reserve the first radio resource, but the terminal device does not actually use the first radio resource for signal transmission.

In other embodiments, the specific state may be the idle state, which may be used to indicate that there are unoccupied radio resources in the first radio resource; or, the idle state may be used to indicate that the occupancy rate of the first radio resource is less than or equal to an occupancy rate threshold.

In one implementation manner, the idle state may be used to indicate that there are unoccupied radio resources in the first radio resources.

For example, the first radio resource may include multiple time domain symbols. If the terminal device occupies some of the time domain symbols of the first radio resource, or the terminal device does not occupy any time domain symbol of the first radio resource, the resource usage state of the first radio resource may be an idle state.

In another implementation manner, the idle state may be used to indicate that the occupancy rate of the first radio resource is less than or equal to an occupancy rate threshold, where the occupancy rate threshold may be any preset value, for example, 50%, 80%, or 90%.

For example, the first radio resource may include multiple time domain symbols, and the ratio of the number of time domain symbols occupied by the terminal device to the number of time domain symbols contained in the first radio resource may be used as the occupancy rate of the first radio resource. If the occupancy rate is less than or equal to the occupancy rate threshold, the resource usage state of the first radio resource may be the idle state.

It should be noted that the division manner of method three is similar to that of method one, the difference lies in that the object of division in method three is the fourth radio resource, that is, the first radio resource with a specific resource usage state, rather than all the first radio resources.

For example, if the network device configures N first radio resources for the terminal device within one CG cycle, or if the number of repetitions of the first radio resources within one CG cycle is N, the first parameter field may include N first indication bits, and one first indication bit is used to indicate the resource usage state of one first radio resource. For example, if N = 4 and the first parameter field is 1100, it may indicate that the first two first radio resources within the CG cycle are in a specific state, while the last two first radio resources are not in the specific state. The second parameter field may include M second indication bits. If the first parameter field indicates that the number of first radio resources in the specific state is m, each first radio resource in the specific state (i.e., the fourth radio resource) may be divided into P second radio resources, where P may be a positive integer obtained by rounding up the quotient of M divided by m, i.e., P=roundup (M/m), where "roundup" means rounding up. Each second radio resource may include K time domain symbols or K-1 time domain symbols, where K may be a positive integer obtained by rounding up the quotient of L divided by P, that is, P=roundup (L/P), where "roundup" means rounding up, and L is the number of time domain symbols included in the first radio resource.

In method 4, a fifth radio resource is divided according to the number of second indication bits to obtain at least one second radio resource, where the fifth radio resource is a radio resource obtained by combining at least one fourth radio resource. In other words, the fifth radio resource is a radio resource obtained by combining first radio resources of which the resource usage state is the specific state (e.g., occupied or idle).

It should also be noted that the division manner of the fourth method is similar to that of the second method, the difference lies in that the object of division in the fourth method is the fifth radio resource, rather than all the first radio resources.

For example, if the network device configures N first radio resources for the terminal device within a CG cycle, or if the number of repetitions of the first radio resources within one CG cycle is N, the first parameter field may include N first indication bits, where one first indication bit is used to indicate the resource usage state of a first radio resource. For example, if N = 4 and the first parameter field is 1100, it indicates that the first two first radio resources within the CG cycle are in the specific state, while the last two first radio resources are not in the specific state. The second parameter field may include M second indication bits. If the first parameter field indicates that there are m first radio resources with the specific resource usage state, the m first radio resources may be combined (e.g., concatenated) to obtain a fourth radio resource, and the fourth radio resource may be divided into M second radio resources. Each second radio resource may include S time domain symbols or S-1 time domain symbols. S may be a positive integer obtained by rounding up the quotient of T divided by M, that is, S = roundup (T/M), where "roundup" means rounding up and T is the number of time domain symbols included in the fourth radio resource.

In this way, the terminal device can determine the second radio resource through any of the above methods, and indicate the resource occupancy of the second radio resource through the second parameter field.

In some embodiments of the present disclosure, none of the resource usage states corresponding to the first radio resources indicated by the first parameter field is the above-mentioned specific state (such as occupied state or idle state), then the first message may not include the second parameter field, or the second parameter field is an invalid value.

In some embodiments of the present disclosure, the above-mentioned first message may not include the first parameter field, or the first parameter field is an invalid value, then none of the resource usage states corresponding to the first radio resources is the specific state (such as occupied state or idle state).

In one implementation manner, if none of the resource usage states corresponding to the first radio resources indicated by the first parameter field is the above-mentioned specific state (e.g., occupied state or idle state), the first message may not include the first parameter field.

In another implementation manner, none of the resource usage states corresponding to the first radio resources indicated by the first parameter field is the above-mentioned specific state (such as occupied state or idle state), then the first parameter field in the first message is an invalid value.

FIG. 5 is a flow chart of a method for determining a resource state shown according to an exemplary embodiment. The method may be performed by a network device in the above communication system. As shown in FIG. 5, the method may include the following.

In S501, the network device receives a first message sent by a terminal device.

The first message may include a first parameter field.

In S502, the network device determines, according to the first parameter field of the first message, a resource usage state of at least one first radio resource within a configured grant (CG) cycle.

The first radio resource is the radio resource allocated to the terminal device by the network device based on the configured grant (CG).

In some embodiments, the network device may allocate N first radio resources within the configured grant (CG) cycle to the terminal device. The terminal device determines the N first radio resources within the configured grant (CG) cycle based on the configuration of the network device and autonomously selects and uses the N first radio resources for uplink transmission within the configured grant (CG) cycle. N may be any value greater than or equal to 1, for example, N may be 4. The first radio resource may also be referred to as a CG PUSCH TO, a CG TO, or a TO.

In one implementation manner, the network device may send a second message to the terminal device, and notify the terminal device of all information corresponding to the first radio resource through the second message.

In another implementation manner, the network device may send a second message and a third message to the terminal device, where a portion of information corresponding to the first radio resource is notified through the second message and another portion of information corresponding to the first radio resource is notified through the third message.

In this way, the network device can allocate N first radio resources within one configured grant CG cycle to the terminal device through any of the above methods.

In some embodiments, the resource usage state of the first radio resource may be an occupied state or an idle state.

In one implementation manner, the resource usage state of the first radio resources may be the occupied state, and the occupied state may be used to indicate that the first radio resource is partially occupied or fully occupied.

In this way, the occupied state may indicate that the first radio resource is partially occupied or fully occupied.

In another implementation manner, the resource usage state of the first radio resource may be an idle state, and the idle state may be used to indicate that there are unoccupied radio resources in the first radio resource.

In another implementation, the resource usage state of the first radio resource may be an idle state, and the idle state may be used to indicate that the occupancy rate of the first radio resource is less than or equal to an occupancy rate threshold.

The occupancy rate threshold may be any preset value, for example, 50%, 80% or 90%.

In this way, the idle state can indicate the resource usage of the first radio resource.

In yet another implementation manner, the resource usage state of the first radio resource may be an occupied state or a non-occupied state.

The occupied state may be used to indicate that the first radio resource is partially occupied or fully occupied, and the non-occupied state may be used to indicate that the first radio resource is not occupied.

In this way, the resource usage of the first radio resource can be indicated by the occupied state and the non-occupied state.

In another implementation manner, the resource usage state of the first radio resource may be an idle state or a non-idle state.

For example, the idle state may be used to indicate that there are unoccupied radio resources in the first radio resources; the non-idle state may be used to indicate that the first radio resources are fully occupied.

For another example, the idle state may be used to indicate that the occupancy rate of the first radio resource is less than or equal to an occupancy rate threshold; and the non-idle state may be used to indicate that the occupancy rate of the first radio resource is greater than an occupancy rate threshold. The occupancy rate threshold may be any preset value, for example, 50%, 80%, or 90%.

In this way, the resource usage of the first radio resource can be indicated by the idle state or the non-idle state.

It should be noted that if one configured grant (CG) cycle includes multiple first radio resources, the resource usage state of different first radio resources may be the same or different.

It should also be noted that for the description of the above-mentioned occupied state, idle state, non-occupied state or non-idle state, reference can be made to the specific description of the terminal device side in the aforementioned embodiments of the present disclosure, and will not be repeated herein.

In some embodiments, the first parameter field may include at least one first indication bit, and the first indication bit may be used to indicate a resource usage state corresponding to the first radio resource.

The number of first indication bits included in the first parameter field may be greater than or equal to the number of first radio resources within the CG cycle, and one first indication bit may be used to indicate the resource usage state of one first radio resource. For example, if the value of the first indication bit is a first value (e.g., 1), it may be used to indicate that the resource usage state of the first radio resource is a specific state (e.g., an occupied state or an idle state); if the value of the first indication bit is a second value (e.g., 0), it may be used to indicate that the resource usage state of the first radio resource is a non-specific state (e.g., a non-occupied state or a non-idle state).

It should be noted that the specific state may be the occupied state or the idle state mentioned above, and the above-mentioned first value and the second value are not equal. For example, the first value may be 1 and the second value may be 0, or vice versa, the first value may be 0 and the second value may be 1, which is not limited by the present disclosure.

For example, the network device allocates N first radio resources to the terminal device within the CG cycle, and the number of first indication bits included in the first parameter field (also referred to as the number of bits or the bit size) may be N, that is, the first parameter field includes N first indication bits, and one first indication bit may be used to indicate the resource usage state corresponding to one first radio resource. Taking N equal to 4 as an example, if the value of the first parameter field consisting of four first indication bits is 1100, it can be determined that the resource usage state of the first and second first radio resources is the specific state, and the resource usage state of the third and fourth first radio resources is the non-specific state.

In this way, the resource usage state corresponding to the first radio resource can be indicated by the first indication bit in the first parameter field.

In some other embodiments, the first parameter field may include an index corresponding to at least one first radio resource, and the resource usage state of the at least one first radio resource is the same.

For the detailed description of the index, reference can be made to the description in the aforementioned embodiments of the present disclosure related to the terminal device, which will not be repeated herein.

In this way, the resource usage state corresponding to the first radio resource can be indicated through the index in the first parameter field.

Through the above method, the network device receives a first message sent by a terminal device and determines the resource usage state of at least one first radio resource within the configured grant (CG) cycle based on the first parameter field of the first message. The first message includes the first parameter field, and the first radio resource is the radio resource allocated by the network device to the terminal device based on the configured grant (CG). In this way, the network device can determine the resource usage state of the first radio resource to flexibly use and schedule the first radio resource, thereby improving the utilization rate of the radio resource allocated based on the CG transmission mode.

FIG. 6 is a flow chart of a method for determining a resource state shown according to an exemplary embodiment. The method may be performed by a network device in the above communication system. As shown in FIG. 6, the method may include the following.

In S501, a network device receives a first message sent by a terminal device.

The first message may include a first parameter field and a second parameter field, the first parameter field may be used to indicate the resource usage state corresponding to the first radio resource; the second parameter field may be used to indicate the resource usage state corresponding to the second radio resource; the second radio resource may be a subset of the first radio resource.

In S502, the network device determines the resource usage state of at least one first radio resource within the configured grant (CG) cycle according to the first parameter field of the first message.

In S503, the network device determines the resource usage state of at least one second radio resource within the configured grant (CG) cycle according to the second parameter field of the first message.

It should be noted that, in the absence of contradictions, this embodiment may be combined with the aforementioned embodiments or implementation methods of the present disclosure and various optional solutions thereof. For the specific implementation of the above steps in this embodiment, reference may also be made to the descriptions in the aforementioned embodiments of the present disclosure, and details will not be repeated here.

In some embodiments, the first radio resource may be a physical uplink shared channel transmission occasion of the configured grant (CG PUSCH TO), and the second radio resource may be a sub-transmission occasion of physical uplink shared channel of the configured grant (CG PUSCH SUB-TO), which may also be referred to as SUB-TO for short. The SUB-TO may be a subset of TO, and one TO may include one or more SUB-TOs.

In some other embodiments, the resource usage state corresponding to the second radio resource may be an idle state or an occupied state. If there are multiple second radio resources, the resource usage states corresponding to different second radio resources may be the same or different.

In one implementation manner, the idle state may be used to indicate that none of the second radio resources is occupied.

In one implementation manner, the occupied state may be used to indicate that the second radio resource is partially occupied or fully occupied.

In some embodiments, the first parameter field may include N first indication bits, where N may be any natural number, and one first indication bit may be used to indicate the resource usage state corresponding to one first radio resource.

Furthermore, the second parameter field may include M second indication bits. Similarly, M may be any natural number, and the sum of M and N may be equal to the number of indication bits. The number of indication bits may be a value preset by the terminal device, or the number of indication bits may be a value preset by the network device and sent to the terminal device. The number of indication bits may be used to indicate the total number of bits in the first parameter field and the second parameter field. The number of indication bits may also be any natural number.

In some embodiments, the second parameter field may include at least one second indication bit, where one second indication bit may be used to indicate the resource usage state of one second radio resource. The second radio resource is determined by any of the following methods.

Manner 1: each first radio resource is divided according to the number of second indication bits to obtain at least one second radio resource.

In some embodiments, the network device may group the second indication bits according to the number of first radio resources, and divide each first radio resource according to the number of bits of each group of second indication bits to obtain at least one second radio resource.

In some embodiments, the network device may determine a first group number of second indication bits corresponding to each first radio resource based on the number of first radio resources and the number of second indication bits contained in the second parameter field, and divide each first radio resource according to the first group number to obtain the first group number of second radio resources.

Manner 2: a third radio resource is divided according to the number of the second indication bits to obtain at least one second radio resource, and the fourth radio resource is a radio resource obtained by combining the at least one first radio resource.

Manner 3: each fourth radio resource is divided according to the number of the second indication bits to obtain at least one second radio resource, and the fourth radio resource is the first radio resource of which resource usage state is an occupied state or an idle state.

For example, the fourth radio resource may be the first radio resource of which resource usage state is a specific state, and the specific state may be any one of the occupied state and the idle state.

In some embodiments, the network device may group the second indication bits according to the number of fourth radio resources, and divide each fourth radio resource according to the number of bits of each group of second indication bits to obtain at least one second radio resource, where the fourth radio resource is at least one first radio resource of which the resource usage state is the specific state (for example, occupied state or idle state).

In some embodiments, the terminal device can determine a second group number of second indication bits corresponding to each fourth radio resource based on the number of fourth radio resources and the number of second indication bits contained in the second parameter field, and divide each fourth radio resource according to the second group number to obtain the second group number of second radio resources.

In method 4, a fifth radio resource is divided according to the number of second indication bits to obtain at least one second radio resource, where the fifth radio resource is a radio resource obtained by combining above-mentioned at least one fourth radio resource. In other words, the fifth radio resource is a radio resource obtained by combining first radio resources of which the resource usage state is the specific state (e.g., occupied or idle).

It should be noted that the specific implementation manners of the above-mentioned methods 1 to 4 may refer to the description in the aforementioned embodiments of the present disclosure and will not be repeated herein.

In this way, the network device can determine the second radio resource through any of the above methods, and determine the resource occupancy of the second radio resource according to the second parameter field.

In some embodiments of the present disclosure, in the case that none of the resource usage states corresponding to the first radio resources indicated by the first parameter field is the above-mentioned specific state (such as occupied state or idle state), the first message may not include the second parameter field, or the second parameter field is an invalid value.

In some embodiments of the present disclosure, in the case that the above-mentioned first message may not include the first parameter field, or in the case that the first parameter field is an invalid value, the network device may determine that none of the resource usage states corresponding to the first radio resources is the specific state (such as occupied state or idle state).

In one implementation manner, if none of the resource usage states corresponding to the first radio resources indicated by the first parameter field is the above-mentioned specific state (e.g., occupied state or idle state), the first message may not include the first parameter field.

In another implementation manner, none of the resource usage states corresponding to the first radio resources indicated by the first parameter field is the above-mentioned specific state (such as occupied state or idle state), then the first parameter field in the first message is an invalid value.

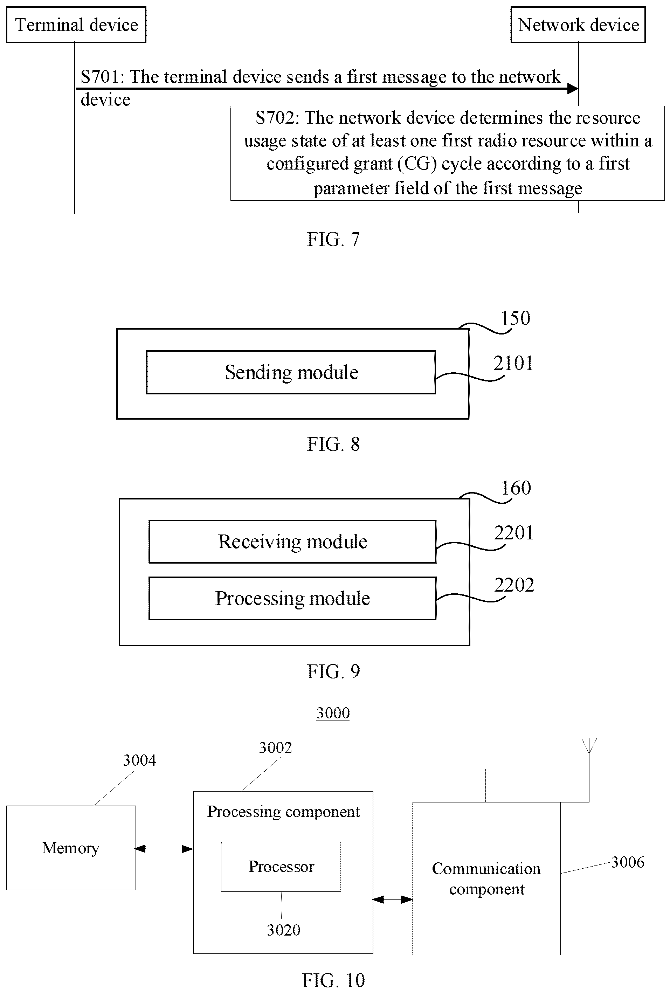

FIG. 7 is a flow chart of a method for determining a resource state shown according to an exemplary embodiment. As shown in FIG. 7, the method may include the following.

In S701, the terminal device sends a first message to the network device.

The first message may include a first parameter field, and the first parameter field may be used to indicate a resource usage state corresponding to the first radio resource.

In S702, the network device determines the resource usage state of at least one first radio resource within the configured grant (CG) cycle according to the first parameter field of the first message.

In some embodiments, the network device may also determine the resource usage state of at least one second radio resource within the configured grant (CG) cycle based on the second parameter field of the first message.

It should be noted that, in the absence of contradictions, this embodiment may be combined with the aforementioned embodiments or implementation methods of the present disclosure and various optional solutions thereof. For the specific implementation of the above steps in this embodiment, reference may also be made to the descriptions in the aforementioned embodiments of the present disclosure, and details will not be repeated herein.

In this way, the network device determines the resource usage state of at least one first radio resource within the configured grant (CG) cycle based on the first parameter field of the first message. The first message includes the first parameter field, and the first radio resource is a radio resource allocated by the network device to the terminal device based on the configured grant CG. In this way, the network device can determine the resource usage state of the first radio resource to flexibly use and schedule the first radio resource, thereby improving the utilization rate of the radio resource allocated based on the CG transmission mode.

In an exemplary embodiment, the present disclosure further provides a communication system, which may include a terminal device and a network device, where the terminal device can execute the method for determining the resource state in the aforementioned embodiments of the present disclosure related to the terminal device; the network device can execute the method for determining the resource state in the aforementioned embodiments related to the network device.

FIG. 8 is a block diagram of a terminal device 150 shown according to an exemplary embodiment. As shown in FIG. 8, the terminal device 150 may include:
a sending module 2101, configured to send a first message to a network device; where the first message includes a first parameter field, and the first parameter field is used to indicate a resource usage state of at least one first radio resource within a configured grant (CG) cycle, and the first radio resource is a radio resource allocated to the terminal device by the network device based on a configured grant (CG) transmission mode.

In some embodiments, the first parameter field includes at least one first indication bit, and the first indication bit is used to indicate the resource usage state corresponding to the first radio resource.

In some embodiments, the first parameter field includes an index corresponding to the at least one first radio resource, and the resource usage state of the at least one first radio resource is the same.

In some embodiments, the first message further includes a second parameter field, where the second parameter field is used to indicate a resource usage state corresponding to a second radio resource, and the second radio resource is a subset of the first radio resource.

In some embodiments, the second parameter field includes at least one second indication bit, and one second indication bit indicates the resource usage state of one second radio resource.

In some embodiments, the method further includes:
grouping the second indication bit according to the number of the first radio resource, and dividing each first radio resource according to the number of bit in each group of the second indication bit to obtain at least one second radio resource; or,
dividing a third radio resource according to the number of the second indication bit to obtain at least one second radio resource, where the third radio resource is a radio resource obtained by combining the at least one first radio resource; or
grouping the second indication bit according to the number of a fourth radio resource, and dividing each fourth radio resource according to the number of bit in each group of the second indication bit to obtain at least one second radio resource, where the fourth radio resource is at least one first radio resource of which the resource usage state is an occupied state or an idle state; or
dividing a fifth radio resource according to the number of bit of the second indication bit to obtain at least one second radio resource, where the fifth radio resource is a radio resource obtained by combining the at least one fourth radio resource.

In some embodiments, the occupied state is used to indicate that the first radio resource is partially occupied or fully occupied.

In some embodiments, the idle state is used to indicate that an unoccupied radio resource exists in the first radio resources; or, the idle state is used to indicate that an occupancy rate of the first radio resource is less than or equal to an occupancy rate threshold.

In some embodiments, none of the resource usage state corresponding to the first radio resource is the occupied state or the idle state, where the first message does not include the first parameter field, or the first parameter field is an invalid value.

In some embodiments, the resource usage state corresponding to the second radio resource is an idle state or an occupied state;
the idle state is used to indicate that none of the second radio resource is occupied; and
the occupied state is used to indicate that the second radio resource is partially occupied or fully occupied.

In some embodiments,
the first parameter field includes N first indication bit, one first indication bit is used to indicate the resource usage state corresponding to one first radio resource, and N is a natural number;
the second parameter field includes M second indication bit, M is a natural number, and a sum of M and N is the number of indication bits; where the number of indication bits is a value pre-set by the terminal device, or the number of indication bits is a value pre-set by the network device and sent to the terminal device.

In some embodiments, the first radio resource is a configured grant physical uplink shared channel transmission occasion (CG PUSCH TO), and the second radio resource is a configured grant physical uplink shared channel sub-transmission occasion (CG PUSCH SUB-TO).

FIG. 9 is a block diagram of a network device 160 shown according to an exemplary embodiment. As shown in FIG. 9, the network device 160 may include:
a receiving module 2201, configured to receive a first message sent by a terminal device; where the first message includes a first parameter field; and
a processing module 2202, configured to determine a resource usage state of at least one first radio resource within a configured grant (CG) cycle according to the first parameter field; where the first radio resource is a radio resource allocated to the terminal device by the network device based on a configured grant (CG) transmission mode.

In some embodiments, the first parameter field includes at least one first indication bit, and the first indication bit is used to indicate a resource usage state corresponding to the first radio resource.

In some embodiments, the first parameter field includes an index corresponding to the at least one first radio resource, and resource usage state of the at least one first radio resource is the same.

In some embodiments, the first message further includes a second parameter field, where the second parameter field is used to indicate a resource usage state corresponding to a second radio resource, and the second radio resource is a subset of the first radio resource; and the processing module 2202 is further configured to determine the resource usage state corresponding to the second radio resource according to the second parameter field.

In some embodiments, the second parameter field includes at least one second indication bit, and one second indication bit indicates the resource usage state of one second radio resource.

In some embodiments, the method further includes:
grouping the second indication bit according to the number of the first radio resource, and dividing each first radio resource according to the number of bit of each group of the second indication bit to obtain at least one second radio resource; or,
dividing a third radio resource according to the number of the second indication bit to obtain at least one second radio resource, where the third radio resource is a radio resource obtained by combining the at least one first radio resource; or
grouping the second indication bit according to the number of a fourth radio resource, and dividing each fourth radio resource according to the number of bit of each group of the second indication bit to obtain at least one second radio resource, where the fourth radio resource is at least one first radio resource of which the resource usage state is an occupied state or an idle state; or
dividing a fifth radio resource according to the number of bit of the second indication bit to obtain at least one second radio resource, where the fifth radio resource is a radio resource obtained by combining the at least one fourth radio resource.

In some embodiments, the occupied state is used to indicate that the first radio resource is partially occupied or fully occupied.

In some embodiments, the idle state is used to indicate that an unoccupied radio resource exists in the first radio resources; or, the idle state is used to indicate that an occupancy rate of the first radio resource is less than or equal to an occupancy rate threshold.

In some embodiments, determining the resource usage state of the at least one first radio resource within the configured grant (CG) cycle according to the first parameter field includes:
in a case that the first message does not include the first parameter field, or the first parameter field is an invalid value, determining that none of the resource usage state corresponding to the first radio resource is the occupied state or the idle state.

In some embodiments, the resource usage state corresponding to the second radio resource is an idle state or an occupied state;
the idle state is used to indicate that none of the second radio resource is occupied; and
the occupied state is used to indicate that the second radio resource is partially occupied or fully occupied.

In some embodiments:
the first parameter field includes N first indication bit, one first indication bit is used to indicate the resource usage state corresponding to one first radio resource, and N is a natural number; and
the second parameter field includes M second indication bit, M is a natural number, and a sum of M and N is the number of indication bits; where the number of indication bits is a value pre-set by the terminal device, or the number of indication bits is a value pre-set by the network device and sent to the terminal device.

In some embodiments, the first radio resource is a configured grant physical uplink shared channel transmission occasion (CG PUSCH TO), and the second radio resource is a configured grant physical uplink shared channel sub-transmission occasion (CG PUSCH SUB-TO).

Regarding the apparatuses in the above embodiments, the specific manner in which each module performs operations has been described in detail in the embodiments related to the method, which will not be elaborated herein.

FIG. 10 is a block diagram of a communication apparatus shown according to an exemplary embodiment. The communication apparatus 3000 may be a terminal device or a network device in the communication system shown in FIG.1.

Referring to FIG. 10, the apparatus 3000 may include one or more of the following components: a processing component 3002, a memory 3004, and a communication component 3006.

The processing component 3002 may be configured to control an overall operation of the apparatus 3000, such as operations associated with a display, a telephone call, a data communication, a camera operation, and a recording operation. The processing component 3002 may include one or more processors 3020 to execute instructions to complete all or part of steps of the above method for determining a resource state. In addition, the processing component 3002 may include one or more modules to facilitate interactions between the component 3002 and other components. For example, the processing component 3002 may include a multimedia module to facilitate interaction between the multimedia module and the processing component 3002.

The memory 3004 is configured to store various types of data to support an operation on the apparatus 3000. Examples of such data include instructions, contact data, phone book data, a message, a picture, a video, etc. for any application or method used to operate on the apparatus 3000. The memory 3004 may be implemented by any types of volatile or non-volatile memory or a combination of these memories, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The communication component 3006 is configured to facilitate wired or wireless communication between the apparatus 3000 and other devices. The apparatus 3000 may access a wireless network based on a communication standard, such as Wi-Fi, 2G, 3G, 4G, 5G, 6G, NB-IOT, eMTC, etc., or a combination of them. In an exemplary embodiment, the communication component 3006 receives a broadcast signal or broadcast-related information from an external broadcast management system by a broadcast channel. In an exemplary embodiment, the communication component 3006 also includes a near-field communication (NFC) module to facilitate short-range communication. For example, the NFC module may be realized based on a radio frequency identification (RFID) technology, an infrared data association (IrDA) technology, an ultra-wideband (UWB) technology, a bluetooth (BT) technology and other technologies.

In an exemplary embodiment, the apparatus 3000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above-described method for determining a resource state.

The apparatus 3000 may be an independent electronic device or a part of an independent electronic device. For example, in an embodiment, the electronic device may be an integrated circuit (IC) or a chip, in which the IC may be a single IC or a collection of ICs. The chip may include, but is not limited to, a graphics processing unit (GPU), a central processing unit (CPU), a field programmable gate array (FPGA), a digital signal processor (DSP), an application specific integrated circuit (ASIC), a system on chip (SOC), etc. The integrated circuit or chip may be configured to execute executable instructions (or codes) to implement the method for determining a resource state. The executable instructions may be stored in the integrated circuit or chip, or may be obtained from other apparatuses or devices, for example, the integrated circuit or chip includes a processor, a memory, and an interface for communicating with other devices. The executable instructions may be stored in the processor. The method for determining a resource state is implemented when the executable instructions are executed by the processor; or, the method for determining a resource state is implemented when the integrated circuit or chip may receive executable instructions by the interface and transmit the executable instructions to the processor.

In an exemplary embodiment, the disclosure further provides a computer readable storage medium, on which computer program instructions are stored. When the computer program instructions are executed by a processor, steps of the method for determining a resource state are implemented. For example, the computer readable storage medium may be a non-transitory computer readable storage medium including instructions, such as the memory 3004 including instructions. The instructions may be executed by the processor 3020 of the apparatus 3000 to complete the method for determining a resource state. For example, the non-transitory computer readable storage media may be a read-only memory (ROM), a random access memory (RAM), a compact disc read-only memory (CD-ROM), a magnetic tape, a floppy disk, and an optical data storage device.

In another exemplary embodiment, the disclosure also provides a computer program product including a computer program capable of being executed by a programmable device, in which the computer program has a part of codes for executing the method for determining a resource state when executed by the programmable device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exact construction that has been described above and illustrated in the accompanying drawings, and that various modifications and changes may be made without departing from the scope thereof, and the scope of the present disclosure is limited only by the appended claims.

## Claims

1. A method for determining a resource state, performed by a terminal device, the method comprising:
sending a first message to a network device; wherein the first message comprises a first parameter field, the first parameter field is used to indicate a resource usage state of at least one first radio resource within a configured grant (CG) cycle, and the first radio resource is a radio resource allocated to the terminal device by the network device based on a configured grant (CG) transmission mode.

2. The method according to claim 1, wherein the first parameter field comprises a first indication bit, and the first indication bit is used to indicate a resource usage state corresponding to the first radio resource.

3. The method according to claim 1, wherein the first parameter field comprises an index corresponding to the at least one first radio resource, and the resource usage state of the at least one first radio resource is the same.

4. The method according to claim 1, wherein the first message further comprises a second parameter field, wherein the second parameter field is used to indicate a resource usage state corresponding to a second radio resource, and the second radio resource is a subset of the first radio resource.

5. The method according to claim 4, wherein the second parameter field comprises at least one second indication bit, and one second indication bit indicates the resource usage state of one second radio resource.

6. The method according to claim 5, further comprising:
grouping the second indication bit according to the number of the first radio resource, and dividing each of the first radio resource according to the number of bit in each group of the second indication bit to obtain at least one second radio resource; or,
dividing a third radio resource according to the number of the second indication bit to obtain at least one second radio resource, wherein the third radio resource is a radio resource obtained by combining the at least one first radio resource; or
grouping the second indication bit according to the number of a fourth radio resource, and dividing each of the fourth radio resource according to the number of bit in each group of the second indication bit to obtain at least one second radio resource, wherein the fourth radio resource is at least one first radio resource with the resource usage state being an occupied state or an idle state; or
dividing a fifth radio resource according to the number of bit of the second indication bit to obtain at least one second radio resource, wherein the fifth radio resource is a radio resource obtained by combining at least one fourth radio resource.

7. The method according to claim 6, wherein the occupied state is used to indicate that the first radio resource is partially occupied or fully occupied.

8. The method according to claim 6, wherein,
the idle state is used to indicate that an unoccupied radio resource exists in the first radio resource; or,
the idle state is used to indicate that an occupancy rate of the first radio resource is less than or equal to an occupancy rate threshold.

9. The method according to claim 6, wherein,
none of the resource usage state corresponding to the first radio resource is the occupied state or the idle state, wherein the first message does not comprise the first parameter field, or the first parameter field is an invalid value.

10. The method according to claim 4, wherein the resource usage state corresponding to the second radio resource is an idle state or an occupied state; wherein,
the idle state is used to indicate that none of the second radio resource is occupied; and
the occupied state is used to indicate that the second radio resource is partially occupied or fully occupied.

11. The method according to claim 4, wherein,
the first parameter field comprises N first indication bits, wherein one first indication bit is used to indicate the resource usage state corresponding to one first radio resource, and N is a natural number;
the second parameter field comprises M second indication bits, wherein M is a natural number, and a sum of M and N is the number of indication bits; and wherein the number of indication bits is a value pre-set by the terminal device, or the number of indication bits is a value pre-set by the network device and sent to the terminal device.

12. The method according to any one of claims 4 to 10, wherein the first radio resource is a configured grant physical uplink shared channel transmission occasion (CG PUSCH TO), and the second radio resource is a configured grant physical uplink shared channel sub-transmission occasion (CG PUSCH SUB-TO).

13. A method for determining resource state, performed by a network device, the method comprising:
receiving a first message sent by a terminal device; wherein the first message comprises a first parameter field; and
determining a resource usage state of at least one first radio resource within a configured grant (CG) cycle according to the first parameter field; wherein the first radio resource is a radio resource allocated to the terminal device by the network device based on a configured grant (CG) transmission mode.

14. The method according to claim 13, wherein the first parameter field comprises at least one first indication bit, and the first indication bit is used to indicate a resource usage state corresponding to the first radio resource.

15. The method according to claim 13, wherein the first parameter field comprises an index corresponding to the at least one first radio resource, and resource usage state of the at least one first radio resource is the same.

16. The method according to claim 13, wherein the first message further comprises a second parameter field, wherein the second parameter field is used to indicate a resource usage state corresponding to a second radio resource, and the second radio resource is a subset of the first radio resource;
wherein the method further comprises:
determining the resource usage state corresponding to the second radio resource according to the second parameter field.

17. The method according to claim 16, wherein the second parameter field comprises at least one second indication bit, and one second indication bit indicates the resource usage state of one second radio resource.

18. The method according to claim 17, further comprising:
grouping the second indication bit according to the number of the first radio resource, and dividing each of the first radio resource according to the number of bit in each group of the second indication bit to obtain at least one second radio resource; or,
dividing a third radio resource according to the number of the second indication bit to obtain at least one second radio resource, wherein the third radio resource is a radio resource obtained by combining the at least one first radio resource; or
grouping the second indication bit according to the number of a fourth radio resource, and dividing each of the fourth radio resource according to the number of bit in each group of the second indication bit to obtain at least one second radio resource, wherein the fourth radio resource is at least one first radio resource with the resource usage state being an occupied state or an idle state; or
dividing a fifth radio resource according to the number of bit of the second indication bit to obtain at least one second radio resource, wherein the fifth radio resource is a radio resource obtained by combining at least one fourth radio resource.

19. The method according to claim 18, wherein the occupied state is used to indicate that the first radio resource is partially occupied or fully occupied.

20. The method according to claim 18, wherein,
the idle state is used to indicate that an unoccupied radio resource exists in the first radio resource; or,
the idle state is used to indicate that an occupancy rate of the first radio resource is less than or equal to an occupancy rate threshold.

21. The method according to claim 18, wherein determining the resource usage state of the at least one first radio resource within the configured grant (CG) cycle according to the first parameter field comprises:
in a case that the first message does not comprise the first parameter field, or the first parameter field is an invalid value, determining that none of the resource usage state corresponding to the first radio resource is the occupied state or the idle state.

22. The method according to claim 16, wherein the resource usage state corresponding to the second radio resource is an idle state or an occupied state; wherein,
the idle state is used to indicate that none of the second radio resource is occupied; and
the occupied state is used to indicate that the second radio resource is partially occupied or fully occupied.

23. The method according to claim 16, wherein,
the first parameter field comprises N first indication bits, wherein one first indication bit is used to indicate the resource usage state corresponding to one first radio resource, and N is a natural number;
the second parameter field comprises M second indication bits, wherein M is a natural number, and a sum of M and N is the number of indication bits; and wherein the number of indication bits is a value pre-set by the terminal device, or the number of indication bits is a value pre-set by the network device and sent to the terminal device.

24. The method according to any one of claims 16 to 23, wherein the first radio resource is a configured grant physical uplink shared channel transmission occasion (CG PUSCH TO), and the second radio resource is a configured grant physical uplink shared channel sub-transmission occasion (CG PUSCH SUB-TO).

25. A terminal device, comprising:
a sending module, configured to send a first message to a network device; wherein the first message comprises a first parameter field, the first parameter field is used to indicate a resource usage state of at least one first radio resource within a configured grant (CG) cycle, and the first radio resource is a radio resource allocated to the terminal device by the network device based on a configured grant (CG) transmission mode.

26. A network device, comprising:
a receiving module, configured to receive a first message sent by a terminal device; wherein the first message comprises a first parameter field; and
a processing module, configured to determine a resource usage state of at least one first radio resource within a configured grant (CG) cycle according to the first parameter field; wherein the first radio resource is a radio resource allocated to the terminal device by the network device based on a configured grant (CG) transmission mode.

27. A communication device, comprising:
a processor;
a memory for storing processor-executable instructions;
wherein the processor is configured to execute steps of the method according to any one of claims 1 to 12, or the processor is configured to execute steps of the method according to any one of claims 13 to 24.

28. A computer-readable storage medium, wherein the computer-readable storage medium stores computer program instructions, and the computer program instructions, when executed by a processor, implement steps of the method according to any one of claims 1 to 12, or steps of the method according to any one of claims 13 to 24.

29. A communication system, comprising:
a terminal device, wherein the terminal device is configured to perform the method according to any one of claims 1 to 12; and
a network device, wherein the network device is configured to perform the method according to any one of claims 13 to 24.
